# EUROPÄISCHE PATENTSCHRIFT

(11) **EP 1 910 003 B1**
(45) Veröffentlichungstag und Bekanntmachung des Hinweises auf die Patenterteilung: **18.11.2009**
(21) Anmeldenummer: 05769809.4
(22) Anmeldetag: 28.07.2005
(51) Int. Cl.: B23F 21/16, B23F 21/22, B23Q 39/02

(54) **UNIVERSALMASCHINE ZUR WEICHBEARBEITUNG VON KEGELRÄDERN UND ENTSPRECHENDES VERFAHREN**
UNIVERSAL MACHINE FOR THE SOFT MACHINING OF BEVEL GEARS AND CORRESPONDING METHOD
MACHINE UNIVERSELLE POUR USINAGE AVANT TRAITEMENT DE PIGNONS CONIQUES ET PROCEDE CORRESPONDANT

(43) Veröffentlichungstag der Anmeldung: 16.04.2008
(73) Patentinhaber: Klingelnberg GmbH, 42499 Hückeswagen (DE)
(72) Erfinder: OZDYK, Klaus, 58509 Lüdenscheid (DE); KIRSCH, Roger, 76307 Karlsbad (DE); HACKENBERGER, Elmar, CH-8003 Zürich (CH); LAMSFUSS, Harald, 51688 Wipperfürth (DE); KÖNIG, Torsten, 09394 Hohndorf (DE)
(74) Vertreter: OK pat AG
(86) Internationale Anmeldenummer: PCT/EP2005/053679
(87) Internationale Veröffentlichungsnummer: WO 2007/012351

(56) Entgegenhaltungen:
- EP-A- 0 832 716
- EP-A- 1 018 387
- DE-A1- 2 425 555
- US-A- 5 885 199
- PATENT ABSTRACTS OF JAPAN Bd. 010, Nr. 375 (M-545), 13. Dezember 1986 (1986-12-13) -& JP 61 168420 A (TAKEO INOUE), 30. Juli 1986 (1986-07-30)

## Beschreibung

Die vorliegende Erfindung betrifft eine Vorrichtung und ein Verfahren für die Weichbearbeitung von Kegelrädern, insbesondere zum Trockenbearbeiten. Die Erfindung betrifft auch ein entsprechendes Verfahren.

Es gibt verschiedenste Maschinen, die bei der Fertigung von Kegelrädern und ähnlichen Zahnrädern zum Einsatz kommen. Seit einiger Zeit besteht der Wunsch die Fertigung zu automatisieren. Eine Lösung, die sich bisher aber nur bedingt hat durchsetzen können, ist ein Bearbeitungszentrum, das so ausgelegt ist, dass eine ganze Anzahl von Fertigungsschritten auf ein und derselben Maschine ausgeführt werden können. Solche Maschinen sind nicht nur sehr komplex und daher teuer, sondern erfordern auch einen relativ großen Aufwand beim vorbereitenden Einrichten (Rüstzeit). Auf der anderen Seite sind solche Maschinen, die im Hinblick auf die hohe Flexibilität entwickelt wurden, eher dazu geeignet Einzelanfertigungen oder Kleinstserien zu produzieren.

In dem Europäischen Patent EP 0 832 716 B1 ist eine kompakte Maschine gezeigt und beschrieben, die für das Drehen und Wälzfräsen eines Werkstücks ausgelegt ist, wobei dieses Werkstück nicht umgespannt oder transferiert werden muss. Mit anderen Worten ausgedrückt sitzt das Werkstück nach dem Aufspannen an einer Hauptspindel und wird dort mit verschiedenen Werkzeugen bearbeitet. Es wird als ein Nachteil dieser Maschine angesehen, dass sie aufgrund der Anordnung der verschiedenen Elemente nicht dazu ausgelegt ist eine Trockenbearbeitung auszuführen, da bei der Trockenbearbeitung die Abfuhr der heißen Späne von besonderer Bedeutung ist. Außerdem ist durch die seitliche Anordnung der beiden Schlitten mit den Werkzeugen in Bezug auf das Werkstück der Bewegungsspielraum eingeschränkt.

Die Veröffentlichungsschrift EP-A-0 832 716 offenbart eine Universalmaschine, die einen schwenkbaren Messerkopf für die Bearbeitung von Zähnen an einem Kegelzahnrad-Rohling offenbart. Die Schwenkbarkeit des Messerkopfes geschieht um eine Achse, die senkrecht zu der Achse der Arbeitsspindel steht. Somit ist sie nützlich für die Bearbeitung von schrägen Verzahnungen oder auch bogenförmigen Verzahnungen bei Stirnzahnrädern, nicht jedoch bei Kegelzahnrädern.

Der Erfindung liegt die Aufgabe zugrunde, die Fertigung von Kegelrädern zu vereinfachen.

Eine weitere Aufgabe der Erfindung besteht darin eine entsprechende Vorrichtung bereit zu stellen, die kostengünstig ist.

Diese Aufgaben werden gemäss der Erfindung durch die Merkmale des Anspruchs 1 und durch die Merkmale des Anspruchs 8 gelöst. Weitere vorteilhafte Ausgestaltungen ergeben sich aus den Unteransprüchen.

Die erfindungsgemässe Vorrichtung ist relativ kostengünstig und kann daher in Situationen zum Einsatz kommen, wo komplexe und daher oft auch teure Bearbeitungsmaschinen sich nicht rechnen. Das erfindungsgemässe Verfahren ist speziell für die Bearbeitung von Zahnflanken vor einem Härteprozess, also im weichen Zustand, ausgelegt. Entsprechend sind die Werkzeuge auszuwählen, die zum Einsatz kommen.

### ZEICHNUNGEN

Ausführungsbeispiele der Erfindung werden im Folgenden unter Bezugnahme auf die Zeichnungen näher beschrieben. Es zeigen:
- **FIG. 1**: eine schematische Darstellung der verschiedenen Bearbeitungsschritte beim Herstellen von Kegelrädern;
- **FIG. 2**: eine schematische Darstellung einer ersten Vorrichtung zur Verwendung bei der Weichbearbeitung von Kegelrädern, gemäss Erfindung;
- **FIG. 3**: eine schematische Darstellung einer zweiten Vorrichtung zur Verwendung bei der Weichbearbeitung von Kegelrädern, gemäss Erfindung.

### Detaillierte Beschreibung

Es geht gemäss Erfindung um die Bearbeitung von Kegelrädern. Dieser Begriff umfasst definitionsgemäss auch Tellerräder und Kegelritzel. Auch mit umfasst sind Kegelräder ohne Achsversatz und Kegelräder mit Achsversatz, sogenannte Hypoidräder.

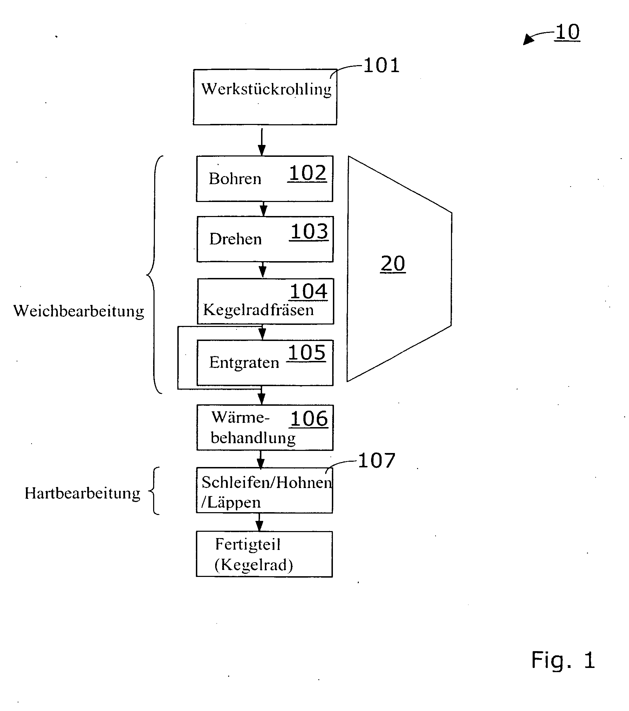

Fig. 1 zeigt eine schematische Darstellung eines beispielhaften Verfahrensablaufs 10. Die Erfindung kann in dem gezeigten Zusammenhang vorteilhaft eingesetzt werden. Es handelt sich, wie erwähnt, um ein Beispiel für die Bearbeitung eines Kegelrades. Ausgehend von einem Werkstückrohling (Box 101) werden in dem gezeigten Beispiel folgende Weichbearbeitungsschritte durchgeführt. Es kann zum Beispiel eine (Zentral-) Bohrung durch Bohren (Box 102) erzeugt werden. Dann kann mit einem Drehstahl der Werkstückrohling durch Drehen (Box 103) bearbeitet werden. Diese Schritte werden im vorliegenden Zusammenhang als Vorform-Herstellung oder als Vorbearbeitung bezeichnet. Im Rahmen der Vorform-Herstellung können auch andere Schritte oder alternative Schritte ausgeführt werden. Am Ende der Vorform-Herstellung wird das Werkstück als Radrohling bezeichnet.

Nun folgt das sogenannte Verzahnen. Gemäss Erfindung wird vorzugsweise (Trocken-)Kegelradfräsen (Box 104) eingesetzt, um an dem Radrohling Zähne zu erzeugen. Dann folgt als optionaler Schritt das Entgraten (Box 105). Die Schritte 102, 103 und 104 oder die Schritte 102 - 105 können gemäss Erfindung in einer erfindungsgemässen Vorrichtung 20 ausgeführt werden.

Anschliessend folgt typischerweise eine Wärmebehandlung (Box 106), um den Radrohling zu härten und eine Nach- oder Feinbearbeitung (Box 107). Dann ist das Kegelrad fertig.

Weitere Details der Erfindung werden im Folgenden anhand einer genaueren Beschreibung der einzelnen Verfahrensschritte und mittels eines Ausführungsbeispieles beschrieben.

Das erfindungsgemässe Verfahren zum Weichbearbeiten von Kegelrädern umfasst die Schritte gemäß Anspruch 8.

In der selben Vorrichtung 20 wird nun auch das Verzahnen durchgeführt. Das geschieht wie folgt. Es wird eine zweite Weichbearbeitung des Radrohlings mit einem Messerkopf 27 durchgeführt, der auf einem Werkzeugaufnehmer 26 eingespannt ist. Ziel dieser zweiten Weichbearbeitung ist es an dem Radrohling eine Verzahnung zu erzeugen. Vorzugsweise umfasst die zweite Weichbearbeitung das (Trocken-)Kegelradfräsen des Radrohlings mittels eines Messerkopfs 27.

Um diese Schritte in der genannten Art und Weise ausführen zu können, befindet sich der multifunktionale Werkzeughalter 25 auf der Werkzeugbasis 24, sowie der Messerkopf 27 auf dem Werkzeugaufnehmer 26 in einer horizontalen Ebene zur Hauptachse B1 der Drehmaschine 22. Vorzugsweise befindet sich die Werkzeugbasis 24 auf der einen und der Werkzeugaufnehmer 26 auf der anderen Seite neben der Achse B1.

Vorzugsweise können alle Bearbeitungsschritte trocken ausgeführt werden. In diesem Fall muss die Vorrichtung 20 jedoch entsprechend ausgestaltet und ausgelegt sein, besonders um die heissen Späne abführen zu können.

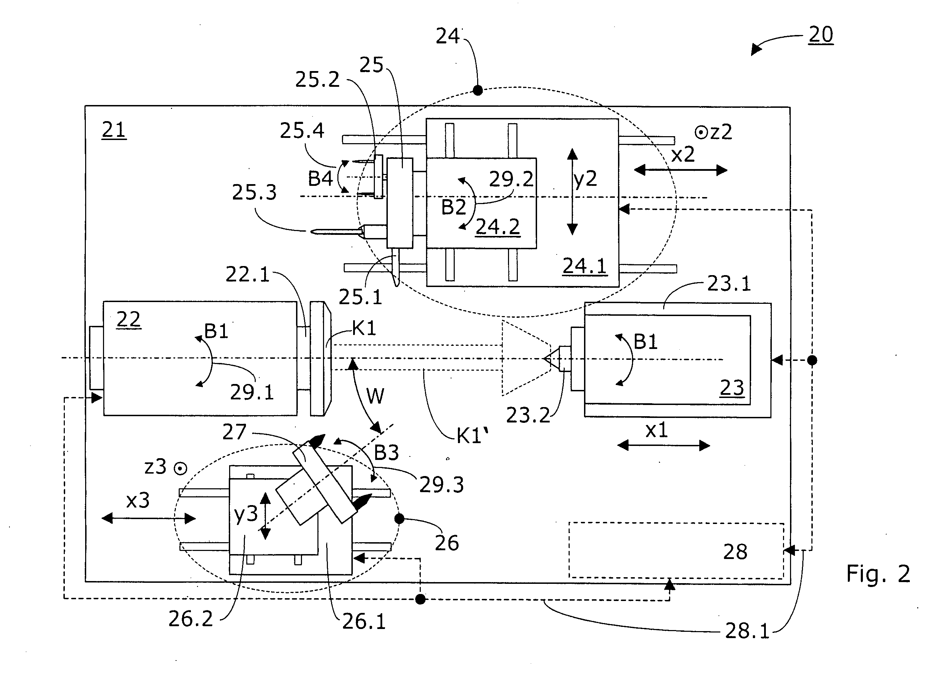

Die erfindungsgemässe Vorrichtung 20 ist in der Fig. 2 gezeigt. Die Vorrichtung 20 ist speziell zur Verwendung bei der Weichbearbeitung von Kegelrädern ausgelegt und umfasst eine CNC-gesteuerte Drehmaschine 22 mit einer Arbeitsspindel 22.1 zur Aufnahme des Werkstückrohlings K1. Die Vorrichtung 20 weist eine Werkzeugbasis 24 mit verschiedenen Werkzeugen 25.1 - 25.3 und einen Werkzeugaufnehmer 26 zur Aufnahme eines Verzahnungswerkzeugs (zum Beispiel einem Fräskopf 27) zum Verzahnen eines Radrohlings auf. Weiterhin kann ein Gegenhalter 23 vorgesehen sein.

Gemäss Erfindung handelt es sich bei der Vorrichtung 20 um eine horizontal arbeitende Bearbeitungsstation auf der Basis einer Drehmaschine, bei welcher der Werkzeugaufnehmer 26 mit dem Messerkopf 27 beim Verzahnen seitlich zur der Arbeitsspindel 22.1 mit dem Radrohling angeordnet ist. (Es ist auch eine Vertikalausführung mit ähnlichem Gesamtaufbau möglich.)

Gemäss Erfindung bildet die Drehmaschine 22 zusammen mit dem Werkzeugaufnehmer 26 eine Funktionseinheit in welcher der Werkstückrohling K1 eine erste Weichbearbeitung erfährt, um dann nach der ersten Weichbearbeitung als Radrohling von dem Messerkopf 27 verzahnt zu werden. Die Vorrichtung 20 verfügt über eine CNC-Steuerung 28, die in Fig. 2 angedeutet ist. Die CNC-Steuerung 28 ist mindestens mit den folgenden Anlageteilen 22, 24, 25, 26 der Vorrichtung 20 steuerungstechnisch verknüpft, was in Fig. 2 durch die Pfeile 34.1 angedeutet ist. Diese Verknüpfung kann über einen Bus oder über eine Kabelverbindung erfolgen. Es ist auch denkbar eine andere Art der Schnittstelle, zum Beispiel eine kabellose Verbindung, einzusetzen, um die CNC-Steuerung 28 mit den einzelnen Anlageteilen 22, 24, 25, 26 zu verknüpfen.

Im Folgenden werden weitere Einzelheiten der in Fig. 2 gezeigten Vorrichtung 20 erläutert. Die Drehmaschine 22 weist eine Hauptrotationsachse B1 auf. Die Arbeitsspindel 22 kann sich um diese Achse B1 drehen, wie durch den Doppelpfeil 29.1 angedeutet ist. Weiterhin sitzt der Gegenhalter 23 koaxial zur Arbeitsspindel 22.1 auf einem Schlitten 23.1 und kann in Längsrichtung zur Hauptrotationsachse B1 verschoben werden, wie durch den Pfeil x1 dargestellt. Zusätzlich weist die Werkzeugbasis 24 eine Rotationsachse B2 auf. Der Werkzeughalter 25 kann um diese Achse B2 gedreht werden, wie dies durch den Doppelpfeil 29.2 angedeutet ist. In der gezeigten Ausführungsform sitzt die Werkzeugbasis 24 auf einem Schlitten 24.1, 24.2 und kann somit samt Werkzeug 25.1, 25.2, 25.3 in den Achsen x2, y2 verschoben werden.

Der Messerkopf 27 kann sich um die Achse B3 drehen, wie durch den Doppelpfeil 29.3 angedeutet ist. Weiterhin sitzt der Werkzeugaufnehmer 26 auf einem Schlitten 26.1, 26.2 und kann in verschiedenen Richtungen verschoben werden, wie durch die Pfeile x3, y3 dargestellt.

In der gezeigten Ausführungsform kann die Arbeitsspindel 22.1 samt Werkstückrohling K1 und/oder Radrohling nicht translatorisch verschoben werden. Eine Verschiebbarkeit parallel zu der Achse x1 ist nicht zwingend notwendig, da das Werkzeug 25.1, 25.2, 25.3 sowie der Messerkopf 27 zugestellt werden können, in dem die Werkzeugbasis 24 oder die Werkzeugaufnahme 26 parallel zur Achse x1 verschoben werden. Eine Verschiebung der Drehmaschine 22 in der Zeichenebene senkrecht zur Achse x1 ist auch nicht zwingend notwendig, da die Werkzeugbasis 24 sowie die Werkzeugaufnahme 26 in y-Richtung y2, y3 verschoben werden können. Die Arbeitsspindel 22.1 kann dennoch auf einem Schlitten angeordnet werden, um weitere Freiheitsgrade zu gewinnen.

Bei den verschiedenen Achsen handelt es sich um numerisch kontrollierte Achsen. Dadurch können die einzelnen Bewegungen numerisch von der CNC-Steuerung 28 gesteuert werden. Vorzugsweise ist die Steuerung 28 so auslegt, dass alle Achsen numerisch kontrolliert gesteuert sind. Wichtig ist, dass jeder einzelne der Bewegungsabläufe koordiniert erfolgt. Diese Koordinierung wird durch die CNC-Steuerung 28 vorgenommen.

Die erfindungsgemässe Vorrichtung 20 ist insofern speziell und hebt sich dadurch von anderen bekannten Ansätzen ab, als das die einzelnen Bearbeitungsstationen 24, 26 horizontal angeordnet sind. Außerdem wurde die Lage der verschiedenen numerisch kontrollierten Achsen so gewählt, dass es für die Bearbeitung des Werkstücks/Radrohlings einen möglichst großen Bewegungsspielraum gibt. Besonders bevorzugt ist die folgende Anordnung der einzelnen Achsen.

Werkzeugbasis 24: Achse x2 verläuft parallel zur Achse x1, wobei die beiden Achse gegeneinander versetzt werden können, indem man eine Relativbewegung parallel zur y2 Richtung ausführt. Damit kann man zum Beispiel mit einem Bohrer 25.3 eine Zentralbohrung im Werkstückrohling K1 herausarbeiten. Die Werkzeugbasis 24 samt Schlitten 24.1, 24.2 ist neben der Arbeitsspindel 22.1 angeordnet und es kann der relative Abstand zueinander verändert werden in dem relative Verschiebungen parallel zu x2 und/oder y2 vorgenommen werden. Vorzugsweise können die beiden Achsen x1, x2 auch in der Tiefe (senkrecht zu der Zeichnungsebene) gegeneinander versetzt werden. Zu diesem Zweck kann der Schlitten 24.1, 24.2 parallel zu einer optionalen z2 Achse verschoben werden.

Werkzeugaufnahme 26 mit Messerkopf 27: Achse x3 verläuft vorzugsweise parallel zur Achse x1. Die Werkzeugaufnahme 26 samt Schlitten 26.1, 26.2 ist ebenfalls horizontal zur Arbeitsspindel 22.1 angeordnet und es kann der relative Abstand zueinander verändert werden in dem eine relative Verschiebung parallel zu den x3, y3 Achsen vorgenommen wird. Vorzugsweise können die beiden Achsen x1, x3 seitlich (in der Zeichnungsebene) gegeneinander versetzt werden. Zu diesem Zweck kann der Schlitten 26.1 parallel zur y3 Achse verschoben werden. Vorzugsweise können die beiden Achsen x1, x3 auch in der Tiefe (senkrecht zu der Zeichnungsebene) gegeneinander versetzt werden. Zu diesem Zweck kann der Schlitten 26.1, 26.2 parallel zu einer optionalen z3 Achse verschoben werden.

Es ist auch denkbar der Werkzeugaufnahme 26 mit Messerkopf 27 ein anderes Koordinatensystem zuzuordnen und die Achsen dieses Koordinatensystems anders anzuordnen. Die CNC-Steuerung 28 muss in diesem Fall eine Koordinatentransformation berücksichtigen, um Bewegungsabläufe zwischen den verschiedenen Koordinatensystemen koordinieren zu können.

Während dem Verzahnen kann ein Winkel W zwischen den beiden Achsen B1 und B3 eingestellt und geändert werden, wie in Fig. 2 gezeigt, wo der Winkel ca. 40° beträgt. Es ist vorzugsweise eine Winkelverstellbarkeit im Bereich vom W1 bis W2 möglich. W wird üblicherweise nicht auf einen festen Wert eingestellt, sondern wird während des Fräsens verändert.

Gemäss einer Ausführungsform der Erfindung weist die Arbeitsspindel 22.1 zur Aufnahme des Werkstückrohlings K1 ein Spann- oder Greifmittel auf, um den Werkstückrohling/Radrohling einspannen zu können. Besonders bevorzugt ist eine Ausführungsform bei welcher die Spann- oder Greifmittel zum automatischen Einspannen ausgelegt sind.

Die Werkzeugbasis 24 der Vorrichtung 20 ist vorzugsweise mit einem Werkzeugrevolver 25.2, der mehrere Werkzeuge aufnehmen kann bestückt. Besonders bevorzugt ist eine Ausführungsform, bei der mindestens eines der Werkzeuge, die sich im multifunktionalen Werkzeugkopf 25 oder im Werkzeugrevolver 25.2 befinden, individuell angetrieben werden kann. Der Werkzeugrevolver 25.2 an sich kann um eine Achse B4 gedreht werden, wie durch den Doppelpfeil 25.4 angedeutet

Die Werkzeugbasis 24 kann zum Drehen, Riefen, Bohren usw. eingesetzt werden.

Der multifunktionale Werkzeughalter 25 weist in der gezeigten Ausführungsform mehrere Werkzeughalter auf. Im gezeigten Beispiel sind drei Werkzeuge 25.1 - 25.3 vorhanden. Der multifunktionale Werkzeughalter 25 ist vorzugsweise so ausgeführt, dass mindestens einer der Werkzeughalter als Spindelkopf ausgelegt ist, um das entsprechende Werkzeug individuell antreiben zu können. Bei dem Werkzeug 25.3 kann es sich zum Beispiel um einen Bohrer oder einen Fräskopf handeln, der um seine Längsachse in Rotation versetzt werden kann. Die Werkzeuge 25.1 und 25.2 können zum Beispiel Werkzeugrevolver, Drehmeissel oder Entgratköpfe sein, die jeweils fest in einem Werkzeughalter des multifunktionalen Werkzeughalters 25 eingespannt sind.

Die Vorrichtung 20 kann modifiziert und den Rahmenbedingungen entsprechend angepasst werden.

Besonders bevorzugt ist eine Vorrichtung 20, die sich dadurch auszeichnet, dass die Vorrichtung 20 eine CNC-Steuerung 28 umfasst, die so ausgelegt ist, dass die Drehmaschine 22, die Werkzeugbasis 24 sowie der Werkzeughalter 25 als Funktionseinheit zusammen mit der Werkzeugaufnahme 26 betreibbar ist. Der Vorteil der Tatsache, dass es nur eine CNC-Steuerung gibt, die sich zum Beispiel in der Drehbank 21 befindet, oder die zum Betrieb mit der Drehbank 21 ausgelegt ist, wird darin gesehen, dass dadurch die Vorrichtung 20 kostengünstiger realisiert werden kann. Diese Kostenersparnis ergibt sich hauptsächlich dadurch, dass das Kegelradfräsen mit dem Messerkopf 27 keine eigene CNC-Steuerung 28 braucht. Außerdem ist das Verknüpfen der Achsen sehr viel weniger aufwendig und die Koordination der einzelnen Bewegungsabläufe auf der Vorrichtung 20 wird einfacher.

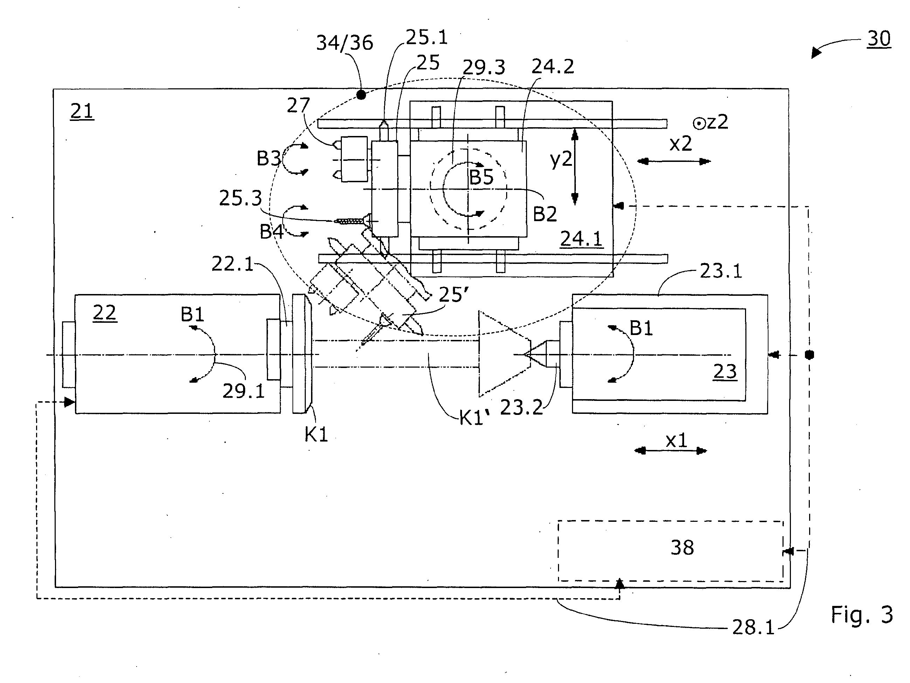

Eine weitere Ausführungsform ist in der Fig. 3 gezeigt. Diese Ausführungsform baut auf dem bisher beschriebenen Prinzip der Erfindung auf. Daher werden, soweit sinnvoll, die selben Bezugszeichen in der Fig. 3 verwendet.

Fig. 3 zeigt eine Vorrichtung 30 bei welcher der multifunktionale Werkzeughalter 34 gleichzeitig auch als Werkzeugaufnahme 36 für einen Messerkopf 27 dient. Der Schlitten 24.2 kann um eine senkrechte Achse B5 gedreht werden, wie durch den Doppelpfeil 29.3 angedeutet. Dadurch kann der Messerkopf 27 in die in Fig. 3 schematisch angedeutete Lage 27' gedreht werden. Stabmesser am Messerkopf 27 können dann die Fräsbearbeitung des Radrohlings K1 vornehmen. Bei dieser Fräsbearbeitung wird sowohl der Messerkopf 27 um seine Achse B3 als auch der Radrohling um die Achse B2 gedreht. Bei der Drehbearbeitung, die zum Beispiel der Fräsbearbeitung vorhergeht, kann eines der anderen Werkzeuge 25.1 oder 25.3 eingesetzt werden. Die Steuerung wird durch eine CNC-Steuerung 38 vorgenommen, die wegen der etwas anderen Anordnung der Achsen und Integration des Messerkopfes 27 in den Werkzeughalter 34 anders ausgeführt ist als die Steuerung 28 in Fig. 2.

Besonders bevorzugt ist eine Ausführungsform bei der die Werkzeugaufnahme 26, 36 oder 46 zum Trockenfräsen oder zum Fräsen mit Minimalschmierung (MQL) von Kegelrädern ausgelegt ist.

Für die Verzahnbearbeitung durch Kegelradfräsen werden gemäss Erfindung je nach der Härte des Werkstücks Werkzeuge aus Hochleistungsstahl, aus Hartmetall, aus Keramik, oder aus Cermet (Kombination aus Metall und Keramik) mit jeweils einer geeigneten Hartstoffbeschichtung eingesetzt.

Es wird als ein Vorteil der vorliegenden Erfindung angesehen, dass ein Werkstück ohne umgespannt zu werden vom Rohling bis zum fertigen Kegelrad bearbeitet werden kann. Es handelt sich also quasi um eine sehr kompakte Fertigungslinie, die aber durch besondere Maßnahmen, auf kleinstem Raum realisiert und zu erschwinglichen Preisen verfügbar gemacht werden kann.

## Patentansprüche

1. Vorrichtung (20), mit
- einer Drehmaschine (22), die eine Arbeitsspindel (22.1) und einen koaxial zu einer Drehachse (B1) der Arbeitsspindel (22.1) angeordneten Gegenhalter (23) zum koaxialen Einspannen eines Werkstückrohlings (K1) aufweist,
- einem multifunktionalen Werkzeughalter (24), der relativ zu dem in der Drehmaschine (22) eingespannten Werkstückrohling (K1) bewegbar ist und eine Werkzeugbasis (25) umfasst, die um eine Achse (B2) drehbar gelagert ist, die im Wesentlichen parallel zu der Drehachse (B1) der Arbeitsspindel (22.1) verläuft, wobei an der Werkzeugbasis (25) mindestens ein Werkzeug (25.1-25.4) befestigbar ist,
- einer Werkzeugaufnahme (26), die-relativ zu dem in der Drehmaschine (22) eingespannten Werkstückrohling (K1) bewegbar ist,
**dadurch gekennzeichnet, dass**
die Vorrichtung (20) einen Messerkopf (27) mit einem Schneidensatz umfasst, der in der Werkzeugaufnahme (26) eingespannt ist,
**und dass** aus dem Werkstückrohling (K1) mit der Vorrichtung (20) Kegelzahnräder herstellbar sind,
**und dass** der Messerkopf (27) um eine in einem Winkel (W) zu der Drehachse (B1) der Arbeitsspindel (22.1) angeordnete Messerkopfachse (B3) rotierbar gelagert ist, die Vorrichtung (20) eine Steuerung (28) umfasst
**und dass** mit der Steuerung (28), vorzugsweise einer CNC-Steuerung, ein Drehen des Werkstückrohlings (K1) mit dem Werkzeug (25.1-25.4) und eine anschließende Verzahnung des abgedrehten Werkstückrohlings (K1) mit dem Messerkopf (27), steuerbar ist.

2. Vorrichtung (20) nach Anspruch 1, **dadurch gekennzeichnet, dass** die Drehmaschine (22) eine horizontal arbeitende Drehmaschine ist.

3. Vorrichtung (20) nach Anspruch 1, **dadurch gekennzeichnet, dass** der Messerkopf (27) seitlich in Bezug auf den Werkstückrohling (K1) zustellbar ist.

4. Vorrichtung (20) nach Anspruch 1, **dadurch gekennzeichnet, dass** die drehbare Werkzeugbasis (25) einen Antrieb umfasst, um durch ein Drehen der Werkzeugbasis (25) um seine Achse (B2) und durch translatorische Bewegungen verschiedene Werkzeuge (25.1, 25.2, 25.3) zustellen zu können.

5. Vorrichtung (20) nach Anspruch 1, 2 oder 3, **dadurch gekennzeichnet, dass** die Vorrichtung durch die Steuerung (28) so steuerbar ist, dass nacheinander erst eine Weichbearbeitung des Werkstückrohlings (K1) und dann das Verzahnen des Werkstückrohlings (K1) mit dem Messerkopf (27) vorzugsweise ohne Kühl- oder Schmiermittel ausführbar ist.

6. Vorrichtung (20) nach Anspruch 1, 2, 3 oder 4, **dadurch gekennzeichnet, dass** die drehbare Werkzeugbasis (25) ein Werkzeugrevolver ist.

7. Vorrichtung (20) nach einem der Ansprüche 1 bis 6, **dadurch gekennzeichnet, dass** die drehbare Werkzeugbasis (25) mindestens ein mit einem eigenen Antrieb antreibbares Werkzeug (25.3) umfasst.

8. Verfahren zum Weichbearbeiten von Kegelzahnrädern, mit den folgenden Schritten:
a. Einspannen eines Werkstückrohlings (K1) an einer Arbeitsspindel (22.1) einer Drehmaschine (22), die einen koaxial zu einer Drehachse (B1) der Arbeitsspindel (22.1) angeordneten Gegenhalter (23) zum koaxialen Einspannen des Werkstückrohlings (K1) aufweist,
b. Durchführen einer Drehbearbeitung mit einem an einer Werkzeugbasis (25) befestigten Werkzeug, wobei die Drehmaschine (22) zu diesem Zweck einen multifunktionalen Werkzeughalter (24) umfasst, der relativ zu dem in der Drehmaschine (22) eingespannten Werkstückrohling (K1) bewegbar ist und eine Werkzeugbasis (25) umfasst, die um eine Achse (B2) drehbar gelagert ist, die im Wesentlichen parallel zu der Drehachse (B1) der Arbeitsspindel (22.1) verläuft,
c. Ausführen einer Verzahnungsbearbeitung mit einem Messerkopf (27), wobei die Drehmaschine (22) zu diesem Zweck eine Werkzeugaufnahme (26) für den Messerkopf (27) umfasst und die Werkzeugaufnahme (26) relativ zu dem in der Drehmaschine (22) eingespannten Werkstückrohling (K1) bewegbar und der Messerkopf (27) um eine in einem Winkel (W) zu der Drehachse (B1) der Arbeitsspindel (22.1) angeordnete Messerkopfachse (B3) rotierbar gelagert ist.

9. Verfahren nach Anspruch 8, **dadurch gekennzeichnet, dass** eine Steuerung (28), vorzugsweise eine CNC-Steuerung, das Drehen des Werkstückrohlings (K1) mit dem Werkzeug (25.1-25.4) und anschließend das Verzahnen des abgedrehten Werkstückrohlings (K1) mit dem Messerkopf (27) steuert.

10. Verfahren nach Anspruch 8, **dadurch gekennzeichnet, dass** der Messerkopf (27) seitlich in Bezug auf den Werkstückrohling (K1) zustellgestellt wird.

## Claims

1. Device (20), having
- a lathe (22), which has a work spindle (22.1) and a buttress (23), situated coaxially to a rotational axis (B1) of the work spindle (22.1), for coaxially chucking a workpiece blank (K1),
- a multifunction tool holder (24), which is movable relative to the workpiece blank (K1) chucked in the lathe (22) and comprises a tool base (25), which is mounted so it is rotatable around an axis (B2), which runs essentially parallel to the rotational axis (B1) of the work spindle (22.1), at least one tool (25.1-25.4) being fastenable on the tool base (25),
- a tool receptacle (26), which is movable relative to the workpiece blank (K1) chucked in the lathe (22),
**characterized in that**
the device (20) comprises a cutter head (27) having a blade insert, which is chucked in the tool receptacle (26),
**and that** bevel gears are producible from the workpiece blank (K1) using the device (20),
**and that** the cutter head (27) is mounted so it is rotatable around a cutter head axis (B3) situated at an angle (W) to the rotational axis (B1) of the work spindle (22.1), the device (20) comprising a controller (28),
**and that** a turning of the workpiece plank (K1) using the tool (25.1-25.4) and a subsequent gear cutting of the turned workpiece blank (K1) using the cutter head (27) are controllable using the controller (28), preferably a CNC controller.

2. Device (20) according to claim 1, **characterized in that** the lathe (22) is a horizontally operating lathe.

3. Device (20) according to claim 1, **characterized in that** the cutter head (27) can be fed laterally in relation to the workpiece blank (K1).

4. Device (20) according to claim 1, **characterized in that** the rotatable tool base (25) comprises a drive, in order to be able to feed various tools (25.1, 25.2, 25.3) by a rotation of the tool base (25) around its axis (B2) and by translational movements.

5. Device (20) according to claim 1, 2, or 3, **characterized in that** the device is controllable by the controller (28) so that in sequence first a green machining of the workpiece blank (K1), and then the gear cutting of the workpiece plank (K1) using the cutter head (27) are executable preferably without coolant or lubricant.

6. Device (20) according to claim 1, 2, 3, or 4, **characterized in that** the rotatable tool base (25) is a tool revolver.

7. Device (20) according to one of claims 1 through 6, **characterized in that** the rotatable tool base (25) comprises at least one tool (25.3) drivable using a separate drive.

8. Method for the green machining of bevel gears, having the following steps:
a. chucking a workpiece plank (K1) on a work spindle (22.1) of a lathe (22), which has a buttress (23) situated coaxially to a rotational axis (B1) of the work spindle (22.1) for coaxially chucking the workpiece blank (K1),
b. performing turning using a tool fastened on a tool base (25), the lathe (22) comprising a multifunctional tool holder (24) for this purpose, which is movable relative to the workpiece blank (K1) chucked in the lathe (22) and comprises a tool base (25), which is mounted so it is rotatable around an axis (B2), which runs essentially parallel to the rotational axis (B1) of the work spindle (22.1),
c. executing gear cutting using a cutter head (27), the lathe (22) comprising a tool receptacle (26) for the cutter head (27) for this purpose, and the tool receptacle (26) being movable relative to the workpiece plank (K1) chucked in the lathe (22), and the cutter head (27) being mounted so it is rotatable around a cutter head axis (B3) situated at an angle (W) to the rotational axis (B1) of the work spindle (22.1).

9. Method according to claim 8, **characterized in that** a controller (28), preferably a CNC controller, controls the turning of the workpiece blank (K1) using the tool (25.1-25.4) and subsequently the gear cutting of the turned workpiece blank (K1) using the cutter head (27).

10. Method according to claim 8, **characterized in that** the cutter head (27) is fed laterally in relation to the workpiece blank (K1).

## Revendications

1. Dispositif (20), avec
- un tour (22) qui présente une broche de travail (22.1) et un bras support (23) disposé de façon coaxiale par rapport à un axe de rotation (B1) de la broche de travail (22.1) pour le serrage coaxial d'une ébauche de pièce (K1),
- un porte-outils mutifonctionnel (24) qui est mobile par rapport à l'ébauche de pièce (K1) serrée dans le tour (22) et comporte une base d'outil qui est logée de façon à tourner autour d'un axe (B2) qui s'étend essentiellement parallèlement à l'axe de rotation (B1) de la broche de travail (22.1), au moins un outil (25.1-25.4) pouvant être fixé à la base d'outil (25),
- un dispositif porte-outils (26) qui est mobile par rapport à l'ébauche de pièce (K1) serrée dans le tour (22),
**caractérisé en ce que**
le dispositif (20) comporte une tête porte-lames (27) avec un jeu de lames, qui est serrée dans le dispositif porte-outils (26),
**et en ce qu**'à partir de l'ébauche de pièce (K1), on peut fabriquer avec le dispositif (20) des roues dentées coniques,
**et en ce que** la tête porte-lames (27) est logée de façon à pouvoir pivoter autour d'un axe de la tête porte-lames (B3) disposé en formant un angle (W) par rapport à l'axe de rotation (B1) de la broche de travail (22.1), **en ce que** le dispositif (20) comporte une commande (28)
**et en ce qu**'avec la commande (28), de préférence une commande numérique par calculateur (CNC), on peut commander un tournage de l'ébauche de pièce (K1) avec l'outil (25.1-25.4) et un taillage d'engrenages ultérieur de l'ébauche de pièce (K1) usinée au tour avec la tête porte-lames (27).

2. Dispositif (20) selon la revendication 1, **caractérisé en ce que** le tour (22) est un tour qui travaille à l'horizontale.

3. Dispositif (20) selon la revendication 1, **caractérisé en ce que** la tête porte-lames (27) peut être avancée latéralement par rapport à l'ébauche de pièce (K1).

4. Dispositif (20) selon la revendication 1, **caractérisé en ce que** la base d'outil (25) rotative comporte un entraînement pour pouvoir avancer différents outils (25.1, 25.2, 25.3) par une rotation de la base d'outil (25) autour de son axe (B2) et par des déplacements de translation.

5. Dispositif (20) selon la revendication 1, 2 ou 3, **caractérisé en ce que** le dispositif peut être commandé par la commande (28) de façon à ce que l'on puisse exécuter l'un après l'autre d'abord un usinage pour matières tendres de l'ébauche de pièce (K1) puis le taillage d'engrenages de l'ébauche de pièce (K1) avec la tête porte-lames (27), de préférence sans agent de refroidissement ou agent lubrifiant.

6. Dispositif (20) selon la revendication 1, 2, 3 ou 4, **caractérisé en ce que** la base d'outil (25) rotative est un outil revolver.

7. Dispositif (20) selon l'une des revendications 1 à 6, **caractérisé en ce que** la base d'outil (25) rotative comporte au moins un outil (25.3) pouvant être entraîné par un entraînement propre.

8. Procédé d'usinage pour matières tendres de roues dentées coniques, comportant les étapes suivantes :
a. serrage d'une ébauche de pièce (K1) au niveau d'une broche de travail (22.1) d'un tour (22) qui présente un bras support (23) disposé de façon coaxiale par rapport à un axe de rotation (B1) de la broche de travail (22.1) pour le serrage coaxial de l'ébauche de pièce (K1),
b. exécution d'un usinage au tour avec un outil fixé à une base d'outil (25), le tour (22) comportant à cet effet un porte-outils (24) multifonctionnel qui est mobile par rapport à l'ébauche de pièce (K1) serrée dans le tour (22) et comporte une base d'outil (25) qui est logée de façon à pouvoir pivoter autour d'un axe (B2) qui s'étend essentiellement parallèlement à l'axe de rotation (B1) de la broche de travail (22.1),
c. exécution d'un usinage de taille d'engrenages avec une tête porte-lames (27), le tour (22) comportant à cet effet un dispositif porte-outils (26) pour la tête porte-lames (27) et le dispositif porte-outils (26) étant mobile par rapport à l'ébauche de pièce (K1) serrée dans le tour (22), et la tête porte-lames (27) étant logée de façon à pouvoir pivoter autour d'un axe de la tête porte-lames (B3) disposé en formant un angle (W) par rapport à l'axe de rotation (B1) de la broche de travail (22.1).

9. Procédé selon la revendication 8, **caractérisé en ce qu'**une commande (28), de préférence une commande numérique par calculateur (CNC), commande le tournage de l'ébauche de pièce (K1) avec l'outil (25.1 - 25.4) et ensuite le taillage d'engrenages de l'ébauche de pièce (K1) usinée au tour avec la tête porte-lames (27).

10. Procédé selon la revendication 8, **caractérisé en ce que** la tête porte-lames est avancée latéralement par rapport à l'ébauche de pièce (K1).
